Europäisches Patentamt

European Patent Office

Office européen des brevets

(11) Veröffentlichungsnummer: **0 206 329**
**B1**

(12) EUROPÄISCHE PATENTSCHRIFT

(45) Veröffentlichungstag der Patentschrift: 02.05.90

(51) Int. Cl.⁵: **E 04 F 15/16**

(21) Anmeldenummer: **86108652.8**

(22) Anmeldetag: **25.06.86**

(54) Sportboden.

(30) Priorität: 26.06.85 DE 3522899

(43) Veröffentlichungstag der Anmeldung:
**30.12.86 Patentblatt 86/52**

(45) Bekanntmachung des Hinweises auf die
Patenterteilung:
**02.05.90 Patentblatt 90/18**

(84) Benannte Vertragsstaaten:
**AT BE CH DE LI NL**

(56) Entgegenhaltungen:
CH-A- 631 228
DE-A-1 962 527
DE-U-6 601 074

(73) Patentinhaber: **Osterwald Sportboden GmbH**
**Warweg 8**
**D-3225 Duingen (DE)**

(72) Erfinder: **Schmidt, Bruno**
**Unter den Eichen 6**
**D-3216 Salzhemmendorf (DE)**

(74) Vertreter: **Reinhard, Skuhra, Weise**
**Friedrichstrasse 31**
**D-8000 München 40 (DE)**

## Beschreibung

Die Erfindung betrifft einen Sportboden gemäß dem Oberbegriff des Patentanspruchs I (vgl CH-A-631228).

Die CH-A-631 228 beschreibt einen Sportboden, bei dem auf einer elastischen Schicht eine aus Kunststoff bestehende zweilagige Lastverteilungsschicht und darüber ein Oberbelag vorgesehen sind.

Die Eigenschaften von Sportböden für Turn-, Sport und Mehrzweckhallen sind in DIN 18032 festgelegt. Sportböden dieser Art werden in drei verschiedene Konstruktionen unterteilt, nämlich in sogenannte punktelastische Böden, flächenelastische Böden und kombinierte Sportböden. Der punktelastische Boden besteht aus einer elastischen Unterschicht, z.B. aus vollflächigem elastischen Schaumstoff und einem Oberbelag, beispielsweise aus Polyvinylchlorid oder Polyurethan. Flächenelastische Böden enthalten entweder eine elastische Unterschicht, z.B. vollflächige elastische Schaumstoffmatten mit Federbrettlagen und eine Lastverteilungsschicht z.B. in Form von verklebten Spanplatten, oder auf Elastikpads angeordnete Federbrettlagen und eine Lastverteilungsschicht. Auf der Lastverteilungsschicht liegt ein Oberbelag aus PVC oder Linoleum. Der kombinierte Boden, eine punkt-flächenelastische Kombination, setzt sich aus einer elastischen Unterschicht mit zusätzlicher biegesteifer Lastverteilungsschicht zusammen, wobei zusätzlich noch eine elastische Schicht und darauf der Oberbelag vorgesehen sind.

Derartige bekannte Böden können nur insoweit mit Niedertemperaturheizungen bzw. Fußbodenheizungen kombiniert werden, als daß die Fußbodenheizung in dem Unterboden, d.h. in dem als Rohboden vorgesehenen Estrich eingebettet wird. Damit sind der Sportboden einerseits und die Fußbodenheizung andererseits voneinander getrennte Systeme, die völlig unabhängig voneinander aufgebaut werden und auch kostenmäßig bezüglich ihres Einbaues voneinander unabhängig sind.

Der Erfindung liegt die Aufgabe zugrunde, einen Sportboden gemäß dem Oberbegriff des Patentanspruchs 1 zu schaffen, der beheizbar ist und der einfachen konstruktiven Aufbau bei hoher Belastbarkeit und ausgewogener Elastizität besitzt.

Diese Aufgabe wird erfindungsgemäß durch die im kennzeichnenden Teil des Patentanspruchs 1 angegebenen Merkmale gelöst.

Weitere Ausgestaltungen des Sportbodens ergeben sich aus den Unteransprüchen.

Die Erfindung schafft einen Sportboden, der durch seinen konstruktiv einfachen Aufbau auch kostensparend und wirtschaftlich ist. Insbesondere kann der Sportboden aus mehreren Einzelelementen bestehen, die den beschriebenen Aufbau haben, so daß ein kompletter Sportboden aus mehreren Elementen an der Baustelle zusammengesetzt wird, wodurch

der Transport der einzelnen Teile vereinfacht und die Herstellung des Sportbodens selbst innerhalb kurzer Zeit sichergestellt ist.

Ein besonderer Vorteil des Sportbodens ist darin zu sehen, daß er die Fußbodenheizung als integralen Bestandteil beinhaltet und insbesondere der Gesamtaufbau auf die Verwendung von plattenförmigen Flächenheizungselementen abgestimmt ist.

Der Sportboden weist die bei einem punktelastischen Boden oder einem flächenelastischen Boden erwünschten Eigenschaften auf. Die bei einem flächenelastischen Boden bekannter Art vorgesehene biegesteife Lastverteilungsschicht wird bei dem erfindungsgemäßen Sportboden durch die integriert vorgesehenen Flächenheizungselemente gebildet. Gleiches gilt für den kombinierten flächen- und punktelastischen Sportboden. Der Einsatz der Flächenheizungselemente als biegesteife Lastverteilungsschicht liefert den Vorteil, daß die bei den bekannten Sportböden erforderliche Lastverteilungsschicht entfällt bzw. durch die Flächenheizungselemente ersetzt wird und daß die Wärme der Flächenheizungselemente unmittelbar, d. h. ohne Verlust, an den Oberbelag weitergeleitet wird. Die gegenüber Spanplatten und Holz -Blindboden geringere Biegesteifigkeit der Flächenheizungselemente führt zu dem Vorteil, daß die Schwingungsausbreitung und die Größe der Durchbiegungsmulde des Sportbodens wesentlich reduziert wird. Nach DIN 18032 soll die Durchbiegungsmulde W50 beim flächenelastischen Sportboden maximal 15 % und beim kombiniert flächen-punktelastischen Sportboden maximal 5 % betragen.

Der Sportboden zeichnet sich ferner durch optimale Nachgiebigkeitswerte aus. Durch das auch bereits bei geringer Belastung schnelle Ansprechverhalten der Nachgiebigkeit werden jugendliche und erwachsene Sportler geschützt und motiviert. Da der Boden aus mehreren, sich gegenseitig abstützenden Schichten besteht, gleichmäßig und ohne Hohlräume aufgebaut ist, ist er wegen seiner extremen Belastbarkeit nicht nur für sportliche Zwecke, sondern auch für Mehrzweck-Veranstaltungen bestens geeignet. Zugleich besitzt der Boden sehr gute Wärme- und Schalldämmungseigenschaften.

Im folgenden wird der erfindungsgemäße Sportboden anhand von Zeichnungen zur Erläuterung weiterer Merkmale beschrieben. Es zeigen:

Fig. 1 die Schnittansicht einer ersten Ausführungsform eines Sportbodens,

Fig. 2 eine Schnittansicht eines Sportbodens entsprechend Fig. 1 mit einer zusätzlichen Lastverteilungsschicht,

Fig. 3 eine Schnittansicht einer weiteren Ausführungsform eines Sportbodens,

Fig. 4 eine weitere Ausgestaltung des Sportbodens, und

Fig. 5 eine Draufsicht auf einen Sportboden gemäß Fig. 2 zur Erläuterung der Anordnung von Stahlblechplatten oder dgl.

Nachfolgend werden bevorzugte Ausführungsformen eines Sportbodens anhand der Zeichnungen erläutert. Obgleich die nachfolgenden Ausführungen sich auf einen Sportboden beziehen, kann der Sportboden aus mehreren Sportbodenelementen zusammengesetzt sein, die jeweils den nachfolgend beschriebenen detaillierten Aufbau besitzen.

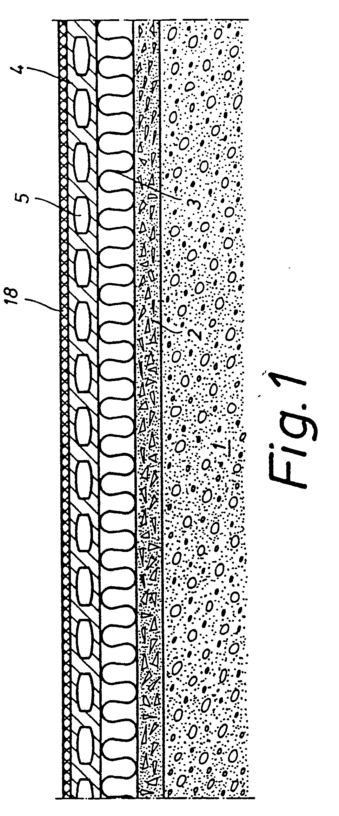

Fig. 1 zeigt einen Sportboden, der auf einer Rohdecke oder einem Estrich 1 vorgesehen ist. Der Sportboden weist eine erste hochelastische Schicht 2 auf, die vorzugsweise aus Polyurethan, Polyethylen, PVC oder aus einer Schicht, aus Gummi-Karkassen-Granulat besteht. Diese Schicht 2 hat den Zweck, eine vergleichbar hohe Nachgiebigkeit gegenüber den nachfolgend vorgesehenen Schichten zu liefern, insbesondere um auf die darüber angeordneten Schichten wirkenden Kräfte oder Stöße mit einem vergleichbar hohen Ansprechverhalten aufzunehmen. Bei einer bevorzugten Ausführungsform liegt über der Schicht 2 eine Schicht 3 geringer Elastizität, z.B. aus Hartschaum, Styrol oder Polystyrol. Die Schicht 3 hat im wesentlichen eine Stütz-funktion für darüber liegende Flächenheizungselemente 4 und bewirkt ferner eine Wärmedämmung, wobei auch die Schicht 2 wärmedämmende Eigenschaften besitzen kann. Die Flächenheizungselemente 4 können auch direkt auf der Schicht 2 liegend vorgesehen sein. Die nicht weiter veranschaulichten plattenförmigen Flächenheizungselemente sind nach der dargestellten Ausführungsform mit in der Horizontalebene verlaufenden Kanälen oder Hohlräumen 5 versehen, durch die das Heizmedium strömt. Die Flächenheizungselemente 4 werden vorzugsweise aus Polypropylen gefertigt und in bekannter Weise als Einzelplatten vorgesehen, wonach die nicht gezeigten Anschlußstücke einzelner Platten miteinander verbunden werden, um den gewünschten Strömungsverlauf zu erzielen. Wie vorstehend erwähnt, kann der in Fig. 1 gezeigte Sportboden auch in Form von mehreren Einzelelementen vorgesehen sein, so daß die Schichten 2, 3 zusammen mit einem Flächenheizelement ein derartiges Sportbodenelement darstellen, das in seiner Gesamtheit vorgefertigt an Ort und Stelle auf den Rohboden 1 aufgelegt wird. Durch das nebeneinanderliegende Anordnen mehrerer derartiger Sportbodenelemente und die Verbindung der Anschlüsse der Flächenheizungselemente wird der Boden in einer Turn-, Sport- oder Mehrzweckhalle elementartig gebildet.

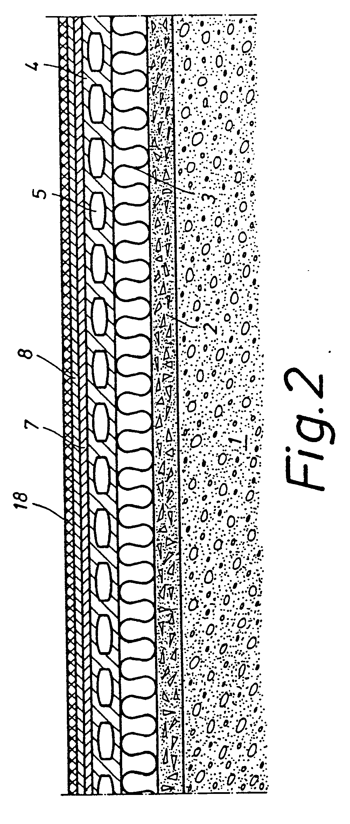

Eine gegenüber Fig. 1 abgewandelte Ausführungsform ist in Fig. 2 gezeigt. Zusätzlich den in Verbindung mit Fig. 1 beschriebenen Schichten ist eine zusätzliche Lastverteilungsschicht vorgesehen, die aus wenigstens einer, vorzugsweise zwei Stahlblechplattenschichten 7, 8 besteht.

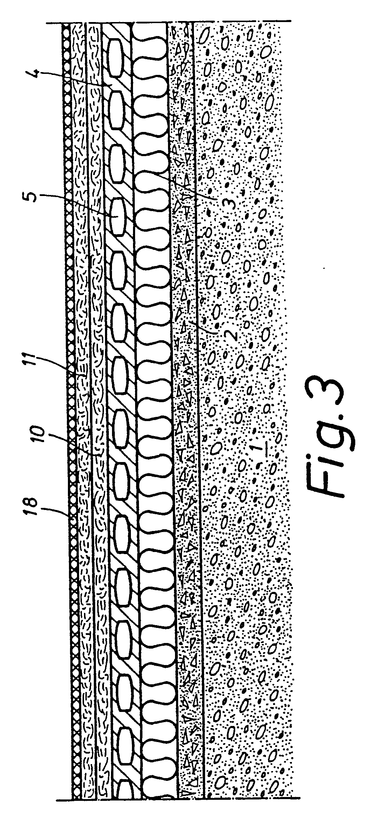

Während bei der Ausführungsform nach Fig. 1 die Lastverteilungsschicht ausschließlich durch die plattenförmigen nebeneinander liegend vorgesehenen Flächenheizungselemente 4 gebildet ist, kann es bei besonders hohen Lasten vorteilhaft sein, zusätzlich zu den Flächenheizungselementen aus hochwärme- und alterungsstabilisierten Polypropylen bzw. Polypropylen-Copolymerisat die mit 7 und 8 bezeichnete zusätzliche Lastverteilungsschicht vorzusehen, die vorzugsweise in Form von zweilagigen, verzinkten oder aluminiumplattierten Stahlblechplatten im Fugenverband vorgesehen sind. Die beiden zweilagigen Schichten 7, 8 können hierbei durch ein Klebemittel miteinander verklebt sein. Nach einer weiteren, in Verbindung mit Fig. 3 dargestellten Ausführungsform besteht der Sportboden bzw. jedes Sportbodenelement aus den Schichten 2, 3 und 4, wie anhand von Fig. 1 beschrieben wurde, und wenigstens einer über den Flächenheizungselementen 4 vorgesehenen Spanplatte 10, vorzugsweise zwei Spanplatten 10, 11. Anstelle von Spanplatten lassen sich auch Sperrholzplatten verwenden. Diese Span- oder Sperrholzplatten 10, 11 sind als zusätzliche Lastverteilungsplatten vorgesehen.

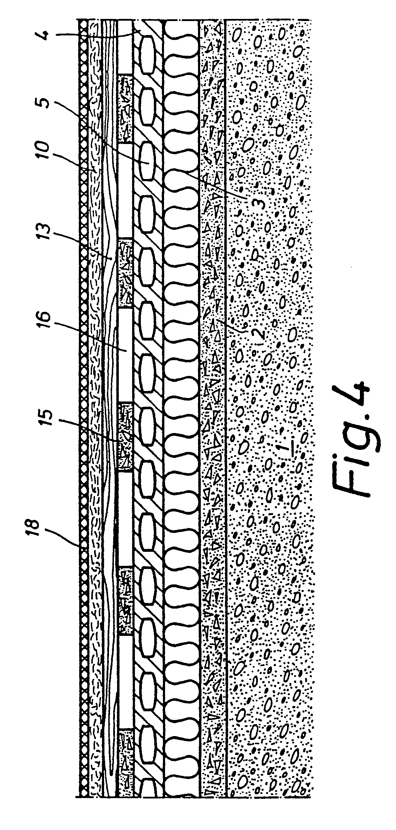

Die Elastizität des Sportbodens nach Fig. 3 läßt sich weiter dadurch verbessern, daß eine Spanplatte 10 verwendet wird und die Spanplatte 10 durch eine in bestimmten Abständen angeordnete Federbrettlage 13 unterstützt wird. Die Elastizität des Sportbodens kann noch weiter dadurch erhöht werden, daß unter der Federbrettlage 13, auf welcher sich eine Spanplatten- oder Sperrholzschicht 10 befindet, Klötze oder Streifen aus elastischem Kunststoffschaum verlegt werden, die in Fig. 4 mit dem Bezugszeichen 15 versehen sind und beispielsweise aus Polyurethan, Polyethylen, PVC oder Gummi-Karkassen-Granulat bestehen. Wie Fig. 4 zeigt, werden durch die plattenförmigen Flächenheizungselemente 4, die Federbrettlage 13 und die Streifen oder Klötze 15 Hohlräume 16 festgelegt, welche zu der gewünschten hohen Elastizität der Schichten 13 und 10 führen. Obgleich nicht in allen Fällen erforderlich, kann, wie aus den Fig. 1 bis 4 ersichtlich ist, auf der Lastverteilungsschicht bzw. auf der obersten Schicht 4 (Fig. 1), 8 (Fig. 2), 11 (Fig. 3) und 10 (Fig. 4) ein Oberbelag in Form von PVC- oder Linoleumbelag oder ein PVC-Verbundbelag, z.B. mit einer elastischen Schaumstoffunterlage, einer Schicht aus Gummi-Karkassen-Granulat mit polyurethanschaum-Beschichtung vorgesehen sein; diese Schicht ist in den Fig. 1 bis 4 mit dem Bezugszeichen 18 verdeutlicht.

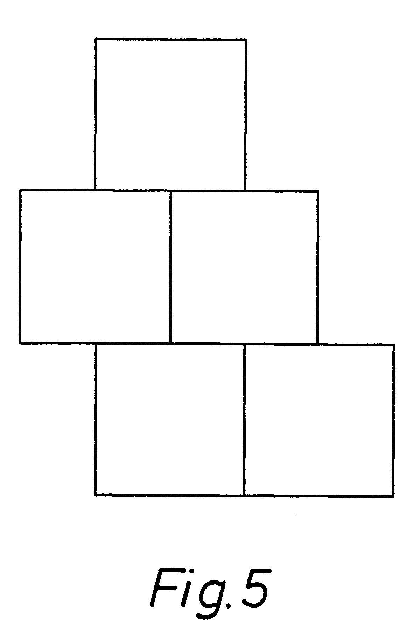

Fig. 5 zeigt eine Aufsicht auf einen Sportboden nach Fig. 2, jedoch ohne Oberbelag 18 zur Verdeutlichung der Anordnung der Stahlblech-, Span- oder Sperrholz-Platten im Fugenverband. Fig. 5 zeigt, daß die Platten einer Lage nebeneinanderliegend, jedoch versetzt vorgesehen sind. Die über oder unter der in Fig. 5 gezeigten Lastverteilungsschicht in Form einer Lage von Platten befindliche weitere Schicht ist so versetzt zu den Platten nach Fig. 5 vorgesehen, daß die Fugen zweier benachbarter Platten der einen Schicht nicht mit einer Fuge zweier benachbarter Platten der darüber oder darunter liegenden Schicht fluchten. Auf diese Weise wird der erwähnte Fugenverband erhalten.

Für den Sportboden nach den Fig. 1 bis 5 werden für die Schicht 2 Materialien gewählt, deren Elastizität auf die jeweilige Lastverteilungsschicht so abgestimmt wird, daß die Elastizität (Kraftabbau) für den Sportboden gemäß DIN 18032, d. h. 50 bis 80 % erreicht wird. Der Druckverformungs-Modul der Schicht 2 kann je nach Wahl der Materialien für die Schichten 7 bis 18 bei 0,03 N/mm² bis etwa 0,6 N/mm² liegen. Die Stärke der Schicht 2 liegt etwa in der Größenordnung von 5 bis 20 mm, während die Stärke der Schicht 3 in der Größenordnung von 10 bis 30 mm liegt. Die Höhe bzw. Stärke der Flächenheizungselemente 4 liegt in der Größenordnung von 5 bis 10 mm, die der Stahlplatten 7, 8 bei etwa 1, I,5 oder 2 mm, zusammen 2 bis 4 mm. Die Stärke der Schichten 10 und 11 bei 8 bis 16 mm, die der Schichten 13 bei ca. 20 mm und die der Klötze ca. 5 bis 20 mm. Damit liegt die Gesamthöhe des erfindungsgemäßen Sportbodens in der Regel je nach Wahl der Materialien für die Schichten 7 bis 18 in der Größenordnung von 25 bis ca. 80 mm.

Bei einer gegenüber Fig. 1 abgewandelten Ausführungsform des beschriebenen Sportbodens ist die Schicht 3 nicht vorgesehen, so daß die Flächenheizungselemente 4 direkt auf der Schicht 2 aufliegen.

## Patentansprüche

1. Sportboden, bestehend aus einer auf einer Rohdecke bzw. einem Estrich (1) unmittelbar aufliegenden elastischen Schicht (2) und einer oberhalb der elastischen Schicht (2) angeordneten weiteren Schicht als Lastverteilungsschicht, dadurch gekennzeichnet, daß als elastische Schicht (2) eine hochelastische Schicht mit einem Elastizitätsmodul im Bereich von 0,03 bis 06 N/mm² vorgesehen ist, und dab plattenförmige Flächenheizungselemente (4) oberhalb der elastischen Schicht (2) angeordnet sind und die Lastverteilungsschicht bilden.

2. Sportboden nach Anspruch 1, dadurch gekennzeichnet, daß die Flächenheizungselemente (4) von einem Heizmedium durchströmt sind.

3. Sportboden nach Anspruch 1 oder 2, dadurch gekennzeichnet, daß die Flächenheizungselemente aus Kunststoff bestehen.

4. Sportboden nach Anspruch 1, dadurch gekennzeichnet, daß zwischen der hochelastischen Schicht (2) und den eine Lastverteilungsschicht bildenden Flächenheizungselementen (4) eine gegenüber der hochelastischen Schicht (2) wesentlich weniger elastische oder unelastische Schicht (3) angeordnet ist.

5. Sportboden nach einem der vorangehenden Ansprüche, dadurch gekennzeichnet, daß die hochelastische Schicht (2) aus Polyurethan, polyethylen, PVC oder Gummi-Karkassen-Granulat besteht.

6. Sportboden nach Anspruch 4, dadurch gekennzeichnet, daß die weniger elastische Schicht (3) aus Hartschaum, Styrol oder Polystyrol besteht.

7. Sportboden nach wenigstens einem der vorangehenden Ansprüche, dadurch gekennzeichnet, daß über den eine Lastverteilungsschicht bildenden Flächenheizungselementen (4) wenigstens eine Lage aus Span- oder Sperrholz-Platten (10, 11) vorgesehen ist.

8. Sportboden nach wenigstens einem der vorangehenden Ansprüche, dadurch gekennzeichnet, daß über den eine Lastverteilungsschicht bildenden Flächenheizungselementen (4) wenigstens eine Lage aus Stahlblechplatten (7, 8) vorgesehen ist.

9. Sportboden nach Anspruch 7 oder 8, dadurch gekennzeichnet, daß die Platten (7, 8, 10, 11) im Fugenverband angeordnet sind.

10. Sportboden nach Anspruch 7, dadurch gekennzeichnet, daß zwischen den eine Lastverteilungsschicht bildenden Flächenheizungselementen (4) und den Spanplatten (10, 13) elastische Streifen oder Klötze (15) eingesetzt sind.

11. Sportboden nach Anspruch 10, dadurch gekennzeichnet, daß die Span- oder Sperrholzplatten (10) durch eine Federbrettlage (13) abgestützt sind.

## Revendications

1. Sol destiné au sport, comprenant une couche élastique (2) reposant directement sur un recouvrement brut ou respectivement une aire (1) et une autre couche, agencée au dessus de la couche élastique (2), à titre de couche de répartition de charge, caractérisé en ce qu'une couche fortement élastique présent un module d'élasticité de l'ordre de 0,03 à 0,06 N/mm² est prévue comme couche élastique (2) et en ce que des éléments de chauffage de surface (4) en forme de plaques sont agencés au-dessus de la couche élastique (2) et forment la couche de répartition de charge.

2. Sol destiné au sport suivant la revendication 1, caractérisé en ce que les éléments de chauffage de surface (4) sont traversés par un milieu chauffant.

3. Sol destiné au sport suivant l'une des revendications 1 et 2, caractérisé en ce que les éléments de chauffage de surface sont constitués de matière synthétique.

4. Sol destiné au sport suivant la revendication 1, caractérisé en ce qu'une couche (3) sensiblement moins élastique que la couche fortement élastique (2) ou non élastique est disposée entre la couche fortement élastique (2) et les éléments de chauffage de surface (4) formant une couche de répartition de charge.

5. Sol destiné au sport suivant une des revendications précédentes, caractérisé en ce que la couche fortement élastique (2) est constituée de polyuréthanne, de polyéthylène, de CPV ou de produit de granulation de carcasses caoutchouteuses.

6. Sol destiné au sport suivant la revendication 4, caractérisé en ce que la couche moins élastique (3) est constituée d'une mousse dure, de styrène ou de polystyrène.

7. Sol destiné au sport suivant au moins l'une des revendications précédentes, caractérisé en ce qu'au moins une strate de panneaux de particules ou de contre-plaqué (10, 11) est prévue au-dessus des éléments de chauffage de surface (4) formant une couche de répartition de charge.

8. Sol destiné au sport suivant au moins une des revendications précédentes, caractérisé en ce qu'au moins une strate de plaques de tôle d'acier (7, 8) est prévue au-dessus des éléments de chauffage de surface (4) formant une couche de répartition de charge.

9. Sol destiné au sport suivant l'une des revendications 7 et 8, caractérisé en ce que les plaques ou panneaux (7, 8, 10, 11) sont agencés dans un assemblage à joints.

10. Sol destiné au sport suivant la revendication 7, caractérisé en ce que des rubans ou blocs élastiques (15) sont introduits entre les éléments de chauffage de surface (4) formant une couche de répartition de charge et les panneaux de particules (10, 13).

11. Sol destiné au sport suivant la revendication 10, caractérisé en ce que les panneaux de particules ou de contre-plaqué (10) sont supportés par une couche de planches flexibles (13).

## Claims

1. Sport floor consisting of an elastic layer (2) lying directly on an uncovered floor or a floor screed (1) and a further layer as load-distributing layer arranged above the elastic layer (2), characterized in that as elastic layer (2) a highly elastic layer having an elasticity modulus in the range of 0.03 to 0.6 N/mm² is provided and that plate-like area heating elements (4) are arranged above the elastic layer (2) and form the load-distributing layer.

2. Sport floor according to claim 1, characterized in that the area heating elements (4) are traversed by a heating medium.

3. Sport floor according to claim 1 or 2, characterized in that the area heating elements consist of plastic.

4. Sport floor according to claim 1, characterized in that between the highly elastic layer (2) and the area heating elements (4) forming a load-distributing layer a layer (3) which is unelastic or substantially less elastic than the highly elastic layer (2) is arranged.

5. Sport floor according to any one of the preceding claims, characterized in that the highly elastic layer (2) consists of polyurethane, polyethylene, PVC or rubber carcass granulate.

6. Sport floor according to claim 4, characterized in that the less elastic layer (3) consists of hard foam, styrene or polystyrene.

7. Sport floor according to at least one of the preceding claims, characterized in that over the area heating elements (4) forming a load-distributing layer at least one layer of chip or plywood boards (10, 11) is provided.

8. Sport floor according to at least one of the preceding claims, characterized in that over the area heating elements (4) forming a load-distributing layer at least one layer of steel plates (7, 8) is provided.

9. Sport floor according to claim 7 or 8, characterized in that the plates (7, 8, 10, 11) are arranged in joint pattern.

10. Sport floor according to claim 7, characterized in that between the area heating elements (4) forming a load-distributing layer and the chip boards (10, 13) elastic strips or blocks (15) are inserted.

11. Sport floor according to claim 10, characterized in that the chip or plywood boards (10) are supported by a spring board layer (13).

*Fig. 1*

Fig.2

Fig.3

*Fig.4*

EP 0 206 329 B1

*Fig.5*